Europäisches Patentamt

(19) European Patent Office

Office européen des brevets

(11) Numéro de publication : **0 305 231 B1**

(12) **FASCICULE DE BREVET EUROPEEN**

(45) Date de publication du fascicule du brevet :
23.10.91 Bulletin 91/43

(21) Numéro de dépôt : **88401818.5**

(22) Date de dépôt : **12.07.88**

(51) Int. Cl.⁵ : **F16B 41/00, // F16B37/14, B60B3/16**

(54) **Dispositif empêchant le desserrage d'un écrou, d'une vis, ou d'un boulon utilisable notamment comme dispositif de protection contre le vol d'une roue d'un véhicule automobile.**

(30) Priorité : 22.07.87 FR 8710380

(43) Date de publication de la demande :
01.03.89 Bulletin 89/09

(45) Mention de la délivrance du brevet :
23.10.91 Bulletin 91/43

(84) Etats contractants désignés :
AT BE CH DE ES GB GR IT LI LU NL SE

(56) Documents cités :
EP-A- 0 070 247
DE-A- 1 919 340
FR-A- 2 401 347
FR-A- 2 531 155
FR-A- 2 595 125

(56) Documents cités :
GB-A- 2 082 711
US-A- 3 222 976
US-A- 3 298 272
US-A- 4 041 833

(73) Titulaire : **Wiener, Bernadette**
**1, avenue Gambetta**
**F-94160 Saint-Mandé (FR)**

(72) Inventeur : **Henry, Max**
**17, rue Rabé**
**F-89230 Pontigny (FR)**
Inventeur : **Callendrier, David**
**rue des Pêcheurs**
**F-74460 Marnaz (FR)**

(74) Mandataire : **Bruder, Michel et al**
**10 rue de la Pépinière**
**F-75008 Paris (FR)**

## Description

La présente invention concerne un dispositif empêchant le desserrage d'un écrou, d'une vis ou d'un boulon de fixation utilisable notamment mais non exclusivement comme dispositif de protection contre le vol d'une roue d'un véhicule automobile.

On connaît déjà des dispositifs antivol qui sont destinés à empêcher le démontage par un tiers d'une roue d'un automobile. Certains de ces dispositifs font appel à un écrou de blocage spécial qui est lui-même coiffé d'un capuchon cylindrique qui peut être rendu solidaire de l'écrou spécial par des moyens actionnés par une clé. D'autres dispositifs de ce genre utilisent un mécanisme de verrouillage comportant des tétons déplacés magnétiquement. Tous ces dispositifs présentent l'inconvénient d'exiger l'emploi d'un écrou spécial à la place d'un écrou de blocage standard.

D'autres dispositifs antivol, tels que ceux décrits dans le brevet EP-A-0070247, utilisent un manchon intermédiaire qui est bloqué d'une manière inamovible sur l'un des écrous de fixation et dont la face frontale présente une combinaison de creux destinés à recevoir des ergots d'une clé de déblocage. Ces ergots sont disposés sur la clé de la même manière que les creux sur le manchon intermédiaire pour pouvoir s'engager dans ces creux et entraîner en rotation le manchon intermédiaire et l'écrou de blocage qui en est solidaire lorsque l'on fait tourner la clé de déblocage.

Un tel dispositif présente l'inconvénient d'être relativement onéreux et d'utiliser le manchon intermédiaire en tant qu'organe transmetteur d'efforts lors du serrage et du desserrage de l'écrou de blocage.

On connaît à ce jour également, ainsi qu'il est décrit dans le brevet FR-A-2531155, un dispositif de ce type dans lequel, entre le capuchon et l'écrou, la vis ou le boulon de fixation, est interposée une douille intermédiaire fendue longitudinalement, à section droite interne polygonale, indentique au profil externe de l'écrou ou de la tête de la vis ou du boulon de fixation, la surface latérale externe cylindrique de la douille intermédiaire présentant, sur une partie de sa hauteur, un filetage de même primitif que celui du capuchon. Ainsi un écrasement de cette douille intermédiaire sur l'écrou ou la tête de la vis ou du boulon de fixation empêche toute possibilité de retrait axial du capuchon.

Le dispositif de ce type s'est avéré assez efficace, mais il présente l'inconvénient important de comporter cette douille intermédiaire qui est un organe difficile à fabriquer, et qui risque de se perdre et de se salir, ce qui rend le dispositif inutilisable.

La présente invention vise à remédier à ces inconvénients en procurant un dispositif de conception particulièrement simple, et d'un faible prix de revient.

A cet effet ce dispositif empêchant le desserrage d'organe prismatique tel qu'un écrou, une tête de vis ou de boulon de fixation, comportant un capuchon destiné à coiffer la tête de l'écrou, de la vis ou du boulon à fixer, ce capuchon comprenant un fond transversal et une jupe cylindrique d'une pièce avec le fond, et des moyens pour bloquer l'organe prismatique, introduit dans le capuchon, par deux arêtes opposées de l'une de ses faces latérales en appui contre la face interne de la jupe, par serrage à l'aide de moyens de serrage coopérant avec des moyens de prise portés par une clef, de forme et disposition caractéristiques, afin d'empêcher toute possibilité de retrait en sens axial du capuchon, est caractérisé en ce que les moyens pour bloquer l'organe prismatique dans le capuchon sont constitués, en combinaison, par une rampe inclinée par rapport à l'axe longitudinal du capuchon, placée à l'intérieur de la jupe, une cale placée entre la rampe inclinée et la face latérale de l'organe prismatique et glissant à la fois sur cette rampe et sur la face latérale de l'organe prismatique et des moyens pour déplacer longitudinalement la cale au contact de la rampe et de la face latérale pour exercer un effort transversal de blocage de l'organe prismatique.

Le dispositif de la présente invention offre l'avantage très important, pour un produit industriel, d'être de la plus haute simplicité de fabrication, d'un prix de revient extrêmement réduit et de ne comporter que des pièces très simple à fabriquer, notamment très facilement remplaçables et assurant aussi bien un bloquage parfait de l'organe prismatique à fixer qu'un serrage et desserage de la plus haute sécurité, ce qui garantit au plus haut niveau la sécurité d'emploi du dispositif.

On décrira ci-après,à titre d'exemples non limitatifs, diverses formes d'exécution de la présente invention, en référence au dessin annexé sur lequel :

La figure 1 est une vue en coupe axiale selon la ligne I-I de la figure 2, d'une première forme d'exécution du dispositif suivant l'invention, destiné à empêcher le desserrage d'un écrou de blocage d'une roue d'un véhicule, le dispositif étant représenté monté sur l'écrou.

La figure 2 est une vue frontale selon la flèche II de la figure 1, de la même forme d'exécution du dispositif.

La figure 3 est une vue partielle, en coupe, similaire à celle de la figure 2, d'une autre forme d'exécution de l'invention.

La figure 4 est une vue partielle en coupe montrant une autre forme d'exécution de la cale selon l'invention de la demande.

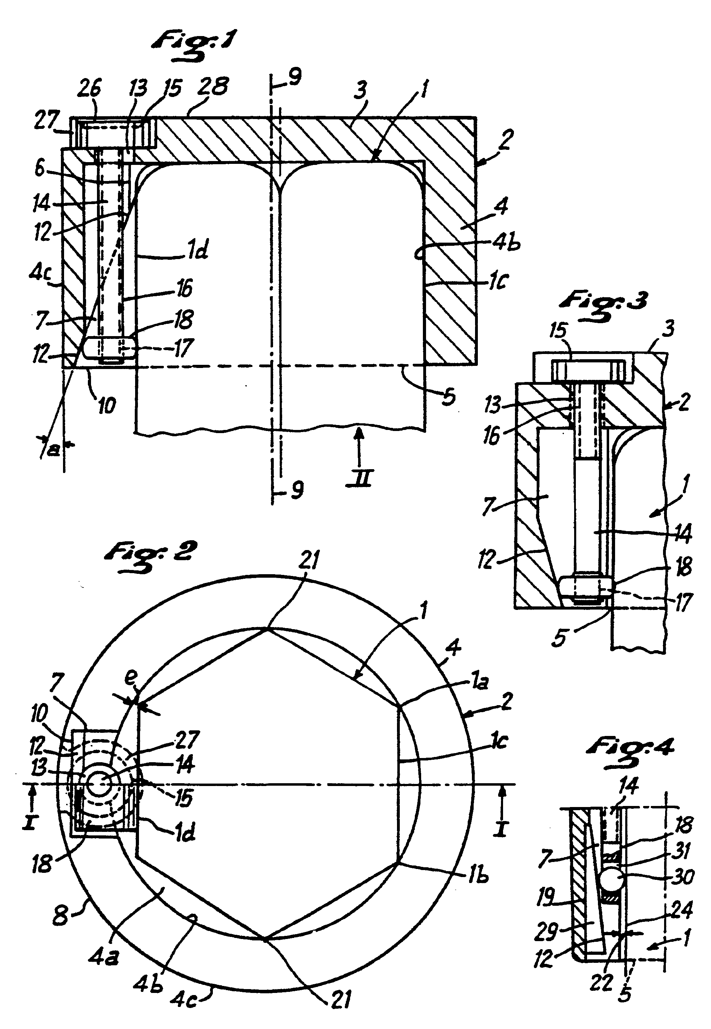

Le dispositif suivant l'invention représenté sur les figures 1 et 2 est destiné à empêcher le desserrage d'un organe prismatique à section droite en forme de polygone régulier, notamment hexagonal, et notamment d'un écrou 1 assurant le blocage d'une roue d'un véhicule automobile. Toutefois, le dispositif suivant l'invention s'adapte aussi bien à n'importe quels vis ou boulons de fixation.

Le dispositif suivant l'invention est constitué en premier lieu d'un capuchon externe 2 qui comprend un fond 3 transversal prolongé par une jupe périphérique cylindrique 4, délimitant à son extrémité un orifice 5 donnant accès de l'extérieur au creux 4a de la jupe 4.

Ce creux 4a est d'un diamètre légèrement plus grand que la dimension transversale maximale de l'écrou 1, mesurée entre deux arêtes opposées, de sorte que la tête de vis 1 puisse entrer très facilement dans le creux 4a, jusqu'à ce qu'il vienne toucher la face interne au fond 3. Entre chaque arête de l'écrou 1 et la face interne 6 de la jupe 4, il reste de ce fait un faible jeu e.

En service l'écrou 1 est logée dans le creux 4a du capuchon 2, de sorte qu'il se trouve dans cette situation, en appui par deux de ses arêtes 1a, 1b qui délimitent l'une de ses faces latérales 1c, sur la surface interne 6 de la jupe 4, ainsi que montré sur la figure 2 du dessin.

Le dispositif de l'invention comprend également des moyens pour bloquer l'écrou 1, introduite dans le creux 4a de la jupe 4, contre la face interne 6 de celle-ci par serrage à l'aide de moyens de serrage, coopérant avec des moyens de prise portés par une clef (non figurée sur le dessin). Ces moyens de serrage ainsi que les moyens de prise portés par la clef ont une forme caractéristique afin d'empêcher l'utilisation d'un outil courant pour débloquer l'écrou 1 et le retirer du capuchon 2. Ces moyens peuvent être du type de ceux généralement connus à ce jour tels qu'un certain nombre de creux à répartition géographique aléatoire, destinés à coopérer avec des parties en saillie similaires d'une clef, permettant seule de visser ou dévisser le boulon. Ces moyens peuvent être également constitués par un creux unique mais de forme caractéristique coopérant avec une saillie de forme identique portée par la clef de manoeuvre, la combinaison du creux et de la saillie variant d'une clef à une autre, pour ne pas permettre l'utilisation de la clef au dévissage d'autres boulons que ceux auxquels elle est associée.

Le dispositif de cette invention comprend, comme moyens pour bloquer l'écrou 1 dans le creux 4a de la jupe 4, en combinaison, une rampe 12 inclinée par rapport à l'axe longitudinal 9 du capuchon 2, placée à l'intérieur de la jupe 4, une cale 18 placée entre la rampe 12 et la face latérale en regard 1d de l'écrou 1, glissant aussi bien sur cette rampe 12 que sur la face latérale 1d de l'écrou, et des moyens pour déplacer longitudinalement, dans le sens parallèle à l'axe longitudinal 9, la cale 18 au contact de la rampe 12 et de la face latérale 1d. Par ce déplacement longitudinal de la cale on exerce un effort sur l'écrou 1 pour le bloquer ou le débloquer dans le creux 4a de la jupe 4.

Selon la présente invention, la jupe cylindrique 4 du capuchon 2 présente, dans sa face interne 4b, une entaille radiale 7, n'atteignant pas la face externe 4c de la jupe 4. Cette entaille 7 a une section droite, dans un plan perpendiculaire à l'axe 9 du capuchon 2, ainsi qu'il est montré sur la figure 2 du dessin, de forme générale rectangulaire.

L'entaille 7 est allongée parallélement à l'axe longitudinal 9 du capuchon 2 et elle débouche à son extrémité inférieure, dans le plan transversal de l'orifice 5 du capuchon, en formant une ouverture rectangulaire 10, de plus grande profondeur que celle de la partie supérieure de l'entaille 7. L'entaille 7 est tronquée suivant un plan, constituant la rampe 12, incliné par rapport à l'axe 9 du capuchon d'un angle a, par exemple, mais de manière non limitative, de préférence de 20°, ainsi qu'il est indiqué sur la figure 1, le plan 12 convergeant vers l'axe 9 au-dessus du capuchon 2, à l'extérieur de la jupe 4. De la sorte, l'entaille 7 a une profondeur constante dans sa partie inférieure puis croissante à partir du côté du fond 3 du capuchon 2, vers le côté débouchant dans l'orifice 5.

Le fond transversal 3 du capuchon 2 présente, au droit de l'entaille 7, un perçage circulaire 13 destiné au passage de la tige 14 d'un boulon longitudinal, dont la tête 15 cylindrique, d'un diamètre plus grand que le diamètre du perçage 13, vient en appui, lorsque la tige 14 du boulon est introduite à travers le perçage 13 à l'intérieur de l'entaille 7 de la jupe 4, sur le bord de ce perçage, à l'extérieur du capuchon, contre la face extérieure du fond 3.

La tige 14 du boulon porte, du côté opposé à sa tête 15, un filetage 16 venant se visser dans un trou taraudé 17 porté par une cale 18 en forme générale de prisme rectangulaire allongé transversalement par rapport à l'entaille 7. La cale 18 vient normalement en appui, lorsque la tige 14 est introduite à travers le perçage 13 à l'intérieur de la jupe 4, par l'une de ses faces, sur la rample inclinée 12, sur laquelle glisse la cale 18 lorsque la tige 14 du boulon est vissée dans le trou taraudé 17 de la cale 18. Afin de faciliter ce glissement, la face en contact de la cale 18 est de préférence arrondie en étant convexe vers la rampe 12, ainsi que montré sur la figure 1 du dessin.

Lorsque l'écrou 1 est introduit dans le creux 4a du capuchon 2, il présente, en face de l'entaille 7, l'une de ses faces latérales 1d, de telle manière que la cale 18 vienne en appui sur cette face latérale 1d par sa face frontale, qui est opposée à sa face qui est en appui sur la rampe 12 de l'entaille 7, comme déjà décrit. L'écrou 1 se trouve, dans cette situation, en appui, par ses deux arêtes 1a, 1b qui délimitent sa face 1c diamétralement opposée à la face latérale 1d placée en face de l'entaille 7, sur la face interne 4b de la jupe 4. La totalité du jeu e est, dans cette situation, reporté du côté de l'entaille 7, ainsi que montré sur la figure 2 du dessin.

La face frontale de la cale 18 en contact avec l'écrou 1 est de préférence arrondie avec sa convexité dirigée vers la face latérale 1d de l'écrou 1, afin que le contact entre ces faces soit réduit au minimum.

Le boulon 14, 15 est de préférence pourvu d'une tête cylindrique, comportant les moyens de serrage coopérant avec les moyens de prise portés par la clef de manoeuvre du boulon mentionné. Dans cette forme d'exécution de l'invention les moyens pour bloquer l'écrou 1 dans le creux 4a sont constitués par la rampe 12, la cale 18 portée par le boulon pourvu de la tige 14 de la tête 15 et comme moyens pour déplacer longitudinalement la cale 18, ce même boulon 14, 15.

Afin de mieux assurer l'impossibilité de se servir d'un outil quelconque, tel que tourne-vis ou pince, pour manipuler le capuchon 2 du dispositif de l'invention, selon une forme d'exécution préférée mais non limitative, un creux de sécurité 27 circulaire est creusé, autour de perçage 13, dans la face extérieure 28 du fond 3 du capuchon 2, d'un diamètre plus grand que celui de la tête 15 du boulon et coaxial avec le perçage 13. La tête 15 du boulon vient se loger dans ce creux 27 en étant enfoncée dans le fond 3, à un niveau tel que la face extérieure 26 de cette tête 15 soit à l'intérieur du creux 27. Les moyens de manipulation du boulon 14 sont placés de toute manière appropriée pour que leur accès ne soit possible qu'avec la clef expressément prévue.

Pour mettre en place le dispositif suivant l'invention sur l'écrou 1 à bloquer, on engage totalement à fond l'écrou 1 dans le creux 4a du capuchon 2, de manière que la face frontale de l'écrou 1 vienne en contact avec le fond 3. On visse alors avec la clef spéciale, qui peut être seule utilisée à cette fin, la tige 14 du boulon dans la cale 18, qui est alors déplacée en direction du fond 3, en glissant en contact sur la rampe inclinée 12 de l'entaille 7 et en même temps sur la face latérale 1d de l'écrou 1. Du fait de l'inclinaison de la rampe 12, la cale 18 repousse progressivement l'écrou 1 vers la face interne 4b de la jupe 4 du côté de la face 1c en appui par ses deux arêtes 1a, 1b. Au fur et à mesure que l'on serre la tige 14 du boulon, l'écrou 1 se trouve de plus en plus coincé entre la face interne 4b de la jupe 4 et la cale 18, de sorte qu'il devient impossible de retirer le capuchon 2 et de libérer l'accès à l'écrou 1, sans desserrer préalablement le boulon 14,15 pour faire coulisser la cale 18 vers l'ouverture d'entrée 10, ce qui n'est possible qu'en faisant de nouveau appel à la clef expressément affectée à cette opération.

Selon une autre forme d'exécution de l'invention montrée sur la figure 3, l'entaille 7 a une profondeur constante dans sa partie supérieure puis décroissante vers le côté débouchant dans l'orifice 5. La partie extrême inférieur inclinée 12 du fond de l'entaille 7 constitue, du fait de son inclinaison par rapport à l'axe longitudinal du capuchon 2, également la rampe de glissement pour la cale 18. La tige 14 du boulon porte, du côté de la tête 15, un filetage 16 venant se visser dans un taraudage porté par le perçage 13 du fond 3 du capuchon 2. Le trou 17 percé dans la cale 18 est alors lisse et il est pourvu de moyens connus permettant à la tige 14 de tourner autour de l'axe longitudinal du boulon, sans pouvoir se déplacer axialement dans ce trou 17.

Dans cette forme d'exécution de l'invention, du fait de l'inclinaison de la rampe 12 en sens inverse par rapport à la forme d'exécution précédente, au fur et à mesure que l'on fait avancer la tige 14, l'écrou 1 est de plus en plus coincé dans le creux 4a du capuchon 2.

Selon une autre forme d'exécution de cette même invention montrée sur la figure 4 du dessin, l'entaille 7 a une forme de profondeur constante sur toute sa longueur. Dans cette entaille 7 est introduite de force, une pièce 29 en forme de coin de sorte qu'elle vienne en appui par une faceplane contre le fond 19 de l'entaille 7, et elle présente vers l'intérieur du creux 4a de la jupe 4 une face inclinée constituant la rampe 12 de glissement pour la cale 18, de même que pour les formes d'exécution précédentes. La cale 18 est pourvue de moyens permettant à la tige 14 de tourner autour de l'axe longitudinal du boulon, sans pouvoir se déplacer axialement par rapport à cette tige 14, et elle comporte une fente 31 allongée dans le sens axial de la tige 14, fente dans laquelle se trouve placée à rotation, selon son axe longitudinal transversal par rapport à la fente 31, une barre cylindrique 30, d'un diamètre qui lui permet de faire saillie hors de la fente 31. Lorsque la cale 18 est bloquée entre la rampe 12 et l'écrou 1, c'est alors cette barre 30 qui est en appui sur les faces opposées de la rampe 12 et de l'écrou 1. Suivant une variante la barre 30 pourrait être remplacée par une bille.

Les formes d'exécution du dispositif suivant l'invention illustrées sur les figures 3 et 4 offrent l'avantage que le capuchon externe 2 est inarrachable du fait que plus on tire sur le capuchon 2 plus celui-ci a tendance à se coincer.

## Revendications

1. Dispositif empêchant le desserrage d'un organe prismatique tel qu'un écrou, une tête de vis ou de boulon de fixation, notamment d'un écrou de blocage d'une roue de véhicule automobile comportant un capuchon destiné à coiffer la tête de l'organe prismatique, ce capuchon comprenant un fond transversal et une jupe cylindrique d'une pièce avec le fond et des moyens pour bloquer l'organe prismatique introduit dans le capuchon, par deux arêtes opposées de l'une de ses faces latérales en appui contre la face interne de la jupe, par serrage à l'aide de moyens de serrage coopérant avec des moyens de prise portés par une clef, de forme et disposition caractéristiques, afin d'empêcher toute possibilité de retrait en sens axial du capuchon, les moyens pour bloquer l'organe prismatique (1) dans le capuchon (2) sont constitués en combinaison par une rampe (12) inclinée par rapport à l'axe longitudinal (9) du capuchon (2), placée à l'intérieur de la jupe (4), une cale (18) placée entre la rampe (12) et la face latérale (1d) de l'organe prismatique (1) glissant à la fois sur cette rampe (12) et sur la face latérale (1d) de l'organe prismatique (1), et des moyens pour déplacer longitudinalement la cale (18) au contact de la rampe (12) et de la face latérale (1d) pour exercer un effort transversal de blocage de l'organe prismatique (1).

2. Dispositif suivant l'une quelconque des revendications précédentes caractérisé en ce que la cale (18), en forme générale de prisme rectangulaire, allongée transversalement par rapport à l'entaille (7), comporte une face en contact avec la rampe (12) qui est arrondie et convexe vers cette rampe (12).

3. Dispositif suivant la revendication 1 caractérisé en ce que la jupe cylindrique (4) comporte, dans sa face interne, une entaille radiale (7) de section droite de forme générale rectangulaire, allongée parallèlement à l'axe longitudinal (9), débouchant dans le plan transversal de l'orifice (5) du capuchon (2), cette entaille (7) étant tronquée suivant un plan incliné par rapport à l'axe (9) du capuchon (2) et constituant la rampe (12).

4. Dispositif suivant la revendication 3 caractérisé en ce que le plan incliné constituant la rampe (12) converge vers l'axe (9) en se rapprochant de cet axe du côté du fond (3) du capuchon (2) et en s'écartant de l'axe (9) du côté de l'orifice (5), le fond (3) du capuchon (2) présente, au droit de l'entaille (7), un perçage (13) à travers lequel passe une tige (14) d'un boulon constituant les moyens pour déplacer longitudinalement la cale (18), cette tige (14) portant, du côté opposé à la tête (15) du boulon, un filetage (16) venant se visser dans un trou taraudé (17) formé dans la cale (18), la tête (15) du boulon cylindrique venant en appui sur le bord du perçage (13), à l'extérieur du capuchon (2), et étant pourvue des moyens de serrage et de vissage du boulon.

5. Dispositif suivant la revendications 3 caractérisé en ce que le plan incliné constituant la rampe (12) converge vers l'axe (9) vers le côté débouchant dans l'orifice (5) du capuchon, le fond (3) du capuchon (2) présente, au droit de l'entaille (7), un perçage (13) à travers lequel passe une tige (14) d'un boulon constituant les moyens pour déplacer longitudinalement la cale (18), la tige (14) du boulon portant, du côté de la tête (15), un filetage (16) venant se visser dans un taraudage porté par le perçage (13) du capuchon (2), le trou (17) porté par la cale (18) étant lisse et pourvu de moyens permettant à la tige (14) de tourner autour de l'axe longitudinal du boulon sans pouvoir se déplacer axialement dans ce trou (17).

6. Dispositif suivant l'une quelconque des revendications 1 et 2 caractérisé en ce que l'entaille (7) a une forme de profondeur constante sur toute sa longueur et une pièce (29) en forme de coin est introduite de force dans l'entaille (7) de sorte qu'elle présente vers l'intérieur du capuchon (2) une face inclinée constituant la rampe (12) de glissement pour la cale (18).

7. Dispositif suivant l'une quelconque des revendications précédentes caractérisé en ce que la cale (18) comporte un fente (31) allongée dans le sens axial de la tige (14) et dans laquelle se trouve placée à rotation, selon son axe longitudinal transversal par rapport à la fente, une barre cylindrique (30) d'un diamètre lui permettant de faire saillie hors de cette fente (31) pour venir en appui sur les faces opposées de la rampe (12) et de l'organe prismatique (2), lorsque la cale (18) est bloquée.

8. Dispositif suivant l'une quelconque des revendications précédentes caractérisé en ce qu'un creux de sécurité (27) est creusé dans la face extérieure (28) du fond (3) du capuchon (2), coaxialement avec le perçage (13), dans lequel la tête (15) du boulon vient se loger enfoncée dans le fond (3) à un niveau tel que la face extérieure (26) de la tête (12) soit à l'intérieur de ce creux (27).

**Patentansprüche**

1. Vorrichtung zum Verhindern des Lösens eines prismatischen Teiles, wie einer Schraubenmutter, eines Schraubenkopfes oder eines Befestigungsbolzens, insbesondere einer Radbefestigungsschraube für ein Kraftfahrzeug, mit einer zum Abdecken des Kopfes des prismatischen Teiles dienenden Kappe, die einen transversalen Boden und einen mit diesem einstückigen zylindrischen Mantel sowie eine Einrichtung zum Blockieren des in die Kappe eingeführten prismatischen Teiles durch Andrücken zweier entgegengesetzter Ränder einer ihrer Seitenflächen, welche an der Innenseite des Mantels anliegen, mit Hilfe einer Klemmvorrichtung aufweist, die mit an einem Schlüssel angeordneten Angriffsmitteln mit charakteristischer Form und Anordnung zusammenwirkt, um jede Möglichkeit des Abziehens der Kappe in axialer Richtung zu verhindern, wobei die Einrichtung zur Blockierung des prismatischen Teiles (1) in der Kappe (2) durch die Kombination einer Rampe (12), die bezüglich der Längsachse (9) der Kappe geneigt und im Inneren des Mantels (4) angeordnet ist, eines Klemmstückes (18), das zwischen der Rampe (12) und der Seitenfläche (1d) des prismatischen Teiles (1) angeordnet ist und auf der Rampe (12) und der Seitenfläche (1d) des prismatischen Teiles (1) gleitet, und einer Einrichtung zum longitudinalen Verlagern des Klemmstückes (18) in Berührung mit der Rampe (12) und der Seitenfläche (1d), um eine transversale Blockierungskraft auf das prismatische Teil (1) auszuüben, gebildet wird.

2. Vorrichtung nach einem der vorhergehenden Ansprüche, **dadurch gekennzeichnet**, daß das Klemmstück (18), das im wesentlichen die Form eines rechtwinkligen, quer zum Schlitz (7) langgestreckten Prismas hat, eine in Berührung mit der Rampe (12) befindliche Fläche aufweist, die gerundet und zur Rampe (12) konvex ist.

3. Vorrichtung nach Anspruch 1, **dadurch gekennzeichnet**, daß der zylindrische Mantel (4) an seiner Innenseite einen radialen Schlitz (7) mit im wesentlichen rechteckigem Querschnitt aufweist, der parallel zur Längsachse (9) langgestreckt ist und in der Ebene quer zur Öffnung (5) der Kappe (12) mündet, und daß der Schlitz (7) entlang einer bezüglich der Achse (9) der Kappe geneigten und die Rampe (12) bildenden Fläche ausgeschnitten ist.

4. Vorrichtung nach Anspruch 3, **dadurch gekennzeichnet**, daß die geneigte Fläche, die die Rampe (12) bildet, sich bei axialer Annäherung an die Seite des Bodens (3) der Kappe (2) der Achse (9) nähert während sie sich auf der Seite der Öffnung (5) von der Achse (9) entfernt ; daß der Boden (3) der Kappe (2) an der Seite des Schlitzes (7) eine Durchbrechung (13) aufweist, durch die ein Schaft (14) eines Schraubenbolzens geht, die die Einrichtung zum longitudinalen Verlagern des Klemmstückes (18) bildet ; daß der Schaft (14) an der dem Kopf (15) des Schraubenbolzens abgewandten Seite ein Gewinde (16) trägt, daß in ein im Klemmstück (18) gebildetes Gewindeloch (17) eingeschraubt ist, und daß der zylindrische Kopf (15) des Schraubenbolzens am Rand der Durchbrechung (13) an der Außenseite der Kappe (2) anliegt und mit einer Einrichtung zum Festziehen und Einschrauben der Schraubenbolzens versehen ist.

5. Vorrichtung nach Anspruch 3, **dadurch gekennzeichnet**, daß die geneigte Fläche, die die Rampe (12) bildet, sich in Richtung der an der Öffnung (5) der Kappe mündenden Seite der Achse (9) nähert, daß der Boden (3) der Kappe (2) auf der Seite des Schlitzes (7) eine Durchbrechung (13) aufweist, durch die ein Schaft (14) eines Schraubenbolzens geht, der die Einrichtung zum longitudinalen Verlagern des Klemmstückes (18) bildet, daß der Schaft (14) des Schraubenbolzens auf der Seite des Kopfes (15) ein Gewinde (16) aufweist, das in ein Innengewinde in der Durchbrechung (13) der Kappe (2) eingeschraubt ist, daß das Loch (17) des Klemmstücks (18) glatt und mit einer Einrichtung versehen ist, die es dem Schaft (14) gestattet, sich um die Längsachse des Schraubenbolzens zu drehen ohne sich im Loch (17) axial zu verlagern.

6. Vorrichtung nach Anspruch 1 oder 2, **dadurch gekennzeichnet**, daß der Schlitz (7) eine Konfiguration mit über seine ganze Länge konstanten Tiefe aufweist und daß ein Stück (29) in Form eines Keiles in den Schlitz (7) derart eingepreßt ist, daß es der Innenseite der Kappe (2) eine geneigte Fläche darbietet, die die Rampe (12) für das Gleiten dem Klemmstückes (18) bildet.

7. Vorrichtung nach einem der vorhergehenden Ansprüche, **dadurch gekennzeichnet**, daß das Klemmstück (18) eine in axialer Richtung des Schaftes (14) längliche Ausnehmung (31) enthält, in der sich ein zylindrischer Stab (30) befindet, der um seine Längsachse quer zum Schlitz drehbar ist und einen Durchmesser hat, der es ihm gestattet über den Schlitz (31) hinauszureichen um an den gegenüberliegenden flächen der Rampe (12) und des prismatischen Teiles (2) anzugreifen wenn das Klemmstück (18) festgezogen wird.

8. Vorrichtung nach einem der vorhergehenden Ansprüche, **dadurch gekennzeichnet**, daß eine Sicherheitsvertiefung (27) in der Außenseite (28) des Bodens (3) der Kappe (2) koaxial mit der Durchbrechung (13) eingebracht ist, in die der Kopf (15) des Schraubenbolzens im Boden (3) mit einem Niveau vertieft zu liegen kommt, daß die Außenseite (26) des Kopfes (12) sich in Inneren der Vertiefung (27) befindet.

## Claims

1. Device for preventing loosening of a prismatic member, such as a fixing nut, screw head or bolt, and particularly a lock nut of a wheel of an automobile vehicle, comprising a cap adapted to cover the head of the prismatic member, this cap comprising a transverse bottom and a cylindrical skirt in one piece with the bottom and means for locking the prismatic member introduced in the cap, by two opposites edges of one of its lateral faces in abutment against the inner face of the skirt, by tightening with the aid of tightening means cooperating with gripping means borne by a spanner, of characteristic shape and arrangement, in order to prevent any possibility of axial withdrawal of the cap, the means for locking the prismatic member (1) in the cap (2) being constituted in combination by a ramp (12) inclined with respect to the longitudinal axis (9) of the cap (2), placed inside the skirt (4), a shim (18) placed between the ramp (12) and the lateral face (1d) of the prismatic member (1) sliding both on this ramp (12) and on the lateral face (1d) of the prismatic member (1), and means for longitudinally displacing the shim (18) in contact with the ramp (12) and the lateral face (1d) in order to exert a transverse effort for locking the prismatic member (1).

2. Device according to claim 1, wherein the shim (18), generally in the form of a rectangular prism, elongated transversely with respect to the notch (7), comprises a face in contact with the ramp (12) which is rounded and convex towards this ramp (12).

3. Device according to claim 1, wherein the cylindrical skirt (4) comprises, in its inner face, a radial notch (7) whose cross section is generally rectangular in form, elongated in parallel to the longitudinal axis (9), opening out in the transverse plane of the orifice (5) of the cap (2), this notch (7) being truncated along an inclined plane with respect to the axis (9) of the cap (2) and constituting the ramp (12).

4. Device according to claim 3, wherein the inclined plane constituting the ramp (12) converges towards the axis (9), moving closer thereto on the cap bottom side (3) and moving away therefrom on the orifice side (5), the bottom (3) of the cap (2) presents, at the level of the notch (7), a bore (13) through which passes a shank (14) of a bolt constituting the means for longitudinally displacing the shim (18), this shank (14) bearing, on the side opposite the head (15) of the bolt, a thread (16) screwing in a tapped hole (17) formed in the shim (18), the head (15) of the cylindrical bolt coming into abutment on the edge of the bore (13), outside the cap (2), and being provided with the means for tightening and screwing the bolt.

5. Device according to claim 3 wherein the inclined plane constituting the ramp (12) converges towards the axis (9) towards the side opening out in the orifice (5) of the cap, the bottom (3) of the cap (2) presents, at the level of the notch (7), a bore (13) through which passes a shank (14) of a bolt constituting the means for longitudinally displacing the shim (18), the shank (14) of the bolt bearing, on the head side (15), a thread (16) screwing in a tapping borne by the bore (13) of the cap (2), the hole (17) borne by the shim (18) being smooth and provided with means allowing the shank (14) to rotate about the longitudinal axis of the bolt without being able to move axially in said hole (17).

6. Device according to claims 1 or 2, wherein the depth of the notch (7) is constant over the whole of its length and a piece (29) in the form of a wedge is introduced by force in the notch (7) so that it presents, towards the inside of the cap (2), an inclined face constituting the ramp (12) for slide of the shim (18).

7. Device according to any of preceding claims, wherein the shim (18) comprises slot (31) elongated in the axial direction of the shank (14) and in which is placed for rotation, along its longitudinal axis transverse with respect to the slot (31), a cylindrical bar (30) whose diameter enables it to project from said slot (31) to come into abutment on the opposite faces of the ramp (12) and the prismatic member (2), when the shim (18) is locked.

8. Device according to any of preceding claims, wherein a safety hollow (27) is made in the outer face (28) of the bottom (3) of the cap (2), coaxially with the bore (13), in which the head (15) of the bolt is driven in the bottom (3) at such a level that the outer face (26) of the head (15) is inside this hollow (27).

Fig.1

Fig.2

Fig.3

Fig.4